# EUROPEAN PATENT APPLICATION

(11) **EP 4 670 881 A1**
(43) Date of publication of application: **31.12.2025**
(21) Application number: 23924089.8
(22) Date of filing: 24.02.2023
(51) Int. Cl.: B23B 51/00

(54) **DRILL**

(71) Applicant: Mitsubishi Materials Corporation, Tokyo 100-8117 (JP)
(72) Inventor: FUJISAWA, Shoichi, Tokyo 100-8117 (JP)
(74) Representative: Hoffmann Eitle
(86) International application number: PCT/JP2023/006752
(87) International publication number: WO 2024/176439

(57) **Abstract**

The drill (10) includes a body (1) extending in an axial direction with a center axis (O) as a center, and the body (1) has a chip discharge groove (4), a rake face, a flank face (6), and a cutting edge (7). The rake face has a first rake face and a second rake face that is disposed radially outward of the first rake face and is connected to an outer peripheral surface 8. The second rake face extends in a direction opposite to a drill rotation direction (T) around the center axis (O) as the second rake face goes toward a radially outer side. The cutting edge (7) includes a first cutting edge (72) extending along a tip edge of the first rake face and a second cutting edge (73) that is connected to a radially outer end portion of the first cutting edge (72) and extends along a tip edge of the second rake face. The second cutting edge (73) has a linear shape or a concave curved shape, and a radial rake angle (θ) of the second cutting edge (73) is a negative angle over an entire length of the second cutting edge (73).

## Description

### TECHNICAL FIELD

The present invention relates to a drill.

The content of Japanese Patent Application No. 2021-179271, filed November 2, 2021, is incorporated herein by reference.

### BACKGROUND ART

For example, as shown in Patent Document 1, a drill having a rake face, a flank face, and a cutting edge is known as a drill in the related art. In the drill of Patent Document 1, the rake face has a return face and a rake face portion. The return face is positioned between an outer peripheral surface and the rake face portion. As shown in FIG. 6 of Patent Document 1, the return face is curved on a side opposite to a rotation direction with respect to a straight line perpendicular to the outer peripheral surface. Therefore, the radially outer end portion of the return face extends in the rotation direction as the radially outer end portion moves toward a radially outer side. Such a return face increases the sharpness of a radially outer end portion of the cutting edge, and prevents work hardening of a workpiece surface (i.e., an inner peripheral surface of a machined hole).

### CITATION LIST

### Patent Document

Patent Document 1: PCT International Publication No. WO2019/021785A

### SUMMARY OF INVENTION

### Technical Problem

This type of drill has the following problems.

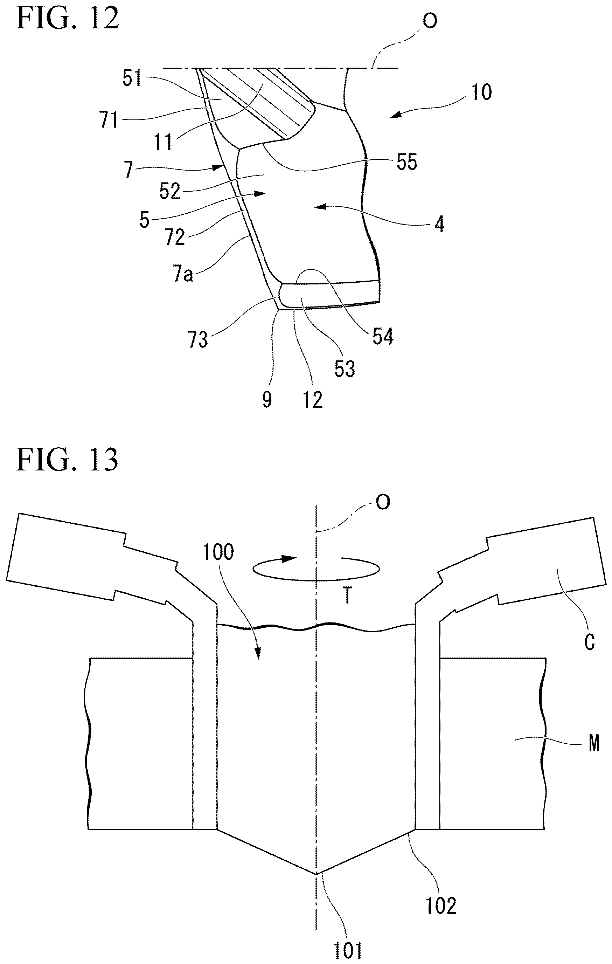

When a through-hole is drilled in a workpiece with a drill, chips generated by machining with a thinning edge positioned at a radially inner end portion of a cutting edge tend to be finely divided. Meanwhile, as shown in FIG. 13 of the present application, chips C generated by the machining performed by a cutting edge portion 102 positioned radially outward of a thinning edge 101 after the thinning edge 101 penetrates a workpiece M tend to be elongated in a thread-like manner. The elongated chip C is likely to be wound around a drill 100 by being bent by a centrifugal force or spreading to the radially outer side as the drill 100 rotates about the center axis O.

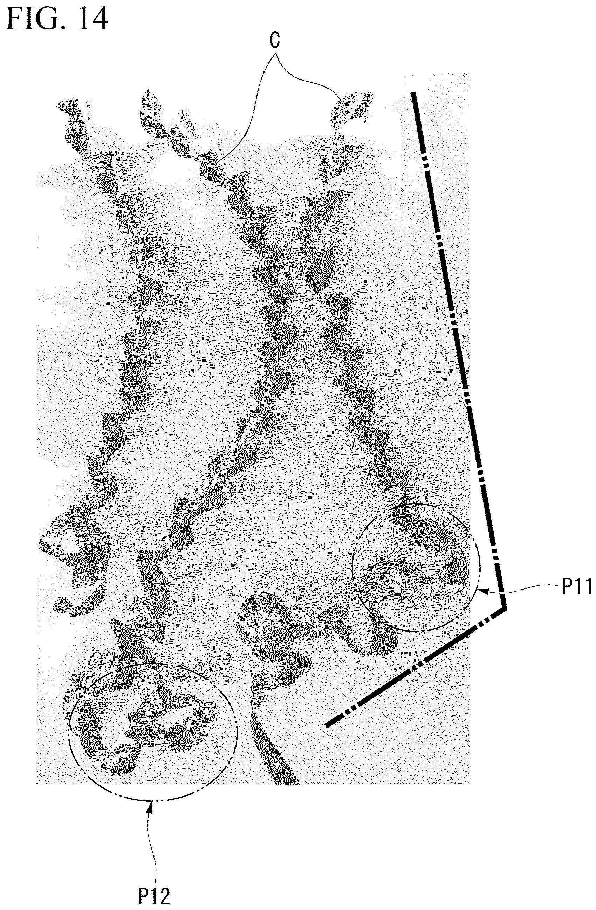

Specifically, as shown in FIG. 14, the chips C generated by the drill 100 in the related art are soft, are bent as shown by a two-dot chain line in FIG. 14, and have a portion P11 that is not divided and a portion P12 that is entangled. In particular, when the cutting edge diameter of the drill 100 is large, the thread-like chips C tend to be more easily elongated.

An object of the present invention is to provide a drill in which chips are satisfactorily processed and the elongated chips are prevented from wrapping around the drill.

### Solution to Problem

[Aspect 1] A drill according to an aspect 1 of the present invention is a drill including a body extending in an axial direction with a center axis as a center, in which the body includes a chip discharge groove that is open to a tip surface and an outer peripheral surface of the body and extends from the tip surface to a rear end side, a rake face that is positioned at least at a tip portion of the chip discharge groove and faces a drill rotation direction around the center axis, a flank face that is disposed on the tip surface, and a cutting edge that is disposed at a ridge line portion where the rake face and the flank face are connected to each other. The rake face includes a first rake face, and a second rake face that is disposed radially outward of the first rake face and is connected to the outer peripheral surface, and the second rake face extends in a direction opposite to the drill rotation direction around the center axis as the second rake face goes toward a radially outer side. The cutting edge includes a first cutting edge extending along a tip edge of the first rake face, and a second cutting edge that is connected to a radially outer end portion of the first cutting edge and extends along a tip edge of the second rake face. The second cutting edge has a linear shape or a concave curved shape, and a radial rake angle of the second cutting edge is a negative angle over an entire length of the second cutting edge.

In the aspect 1, the "radial rake angle of the second cutting edge" refers to an angle formed between the second cutting edge and an imaginary straight line passing through (a part of) the second cutting edge and the center axis, as viewed from the tip side of the drill along the axial direction. In addition, "the radial rake angle of the second cutting edge is a negative angle (minus angle)" refers to a case where the second cutting edge extends in the direction opposite to the drill rotation direction as it moves toward the radially outer side. **When the** radial rake angle is a negative angle, the numerical value of the angle may be represented with a "-" attached. In addition, unlike the present invention, "the radial rake angle of the second cutting edge is a positive angle (plus angle)" refers to a case where the the second cutting edge extends toward the drill rotation direction as it moves toward the radially outer side. When the radial rake angle is a positive angle, the numerical value of the angle may be represented with a "+" attached.

With the drill of the aspect 1, the radial rake angle of the second cutting edge disposed at the radially outer end portion of the cutting edge is a negative angle over the entire region of the edge length of the second cutting edge. Therefore, the cutting resistance is increased when the second cutting edge cuts the workpiece, and a large load is applied to the generated chips to promote the hardening of the chips. Since the chips are hardened, even when the chips are elongated in a thread-like shape, the chips are prevented from bending or spreading radially outward due to the centrifugal force generated by the rotation of the drill. That is, since the chips are likely to extend to the rear end side along the axial direction of the drill and are unlikely to be bent, a problem in which the extended chips are wound around the drill is suppressed.

In addition, since the cut chips are work-hardened, cracks can be easily generated in the cut chips, and the elongated cut chips are easily divided. Therefore, the excessive elongation of the chip is suppressed, and the chip can be satisfactorily processed.

In addition, the second rake face extends in the direction opposite to the drill rotation direction as the second rake face goes toward the radially outer side. Therefore, the chips generated by the cutting with the second cutting edge are likely to be guided to the radially outer side by coming into contact with the second rake face. This action can further improve the chip evacuation performance.

Therefore, according to the aspect 1, the chips are satisfactorily processed, and the elongated chips can be prevented from wrapping around the drill.

[Aspect 2] In the drill of an aspect 2, in the aspect 1, preferably, the cutting edge has a honed portion formed at a cutting edge of the cutting edge, and the honed portion extends over at least the entire length of the second cutting edge.

In the present invention, as described above, the cutting resistance of the second cutting edge is actively increased to improve the chip evacuation performance. By applying the honing over the entire region of the edge length of the second cutting edge as in the aspect 2, chipping, defect, and the like of the second cutting edge are suppressed, and the tool life of the drill is extended.

[Aspect 3] In the drill of an aspect 3, in the aspect 1 or 2, the rake face has a thinning rake face that is disposed radially inward of the first rake face, and the cutting edge has a thinning edge that is connected to a radially inner end portion of the first cutting edge and extends along a tip edge of the thinning rake face. Each of a boundary ridge line where the thinning rake face and the first rake face are connected to each other and a boundary ridge line where the first rake face and the second rake face are connected to each other is a ridge line portion protruding in the drill rotation direction and is connected to the cutting edge. The cutting edge has a honed portion formed at a cutting edge of the cutting edge, the honed portion extends over the thinning edge, the first cutting edge, and the second cutting edge, and a honing width of the honed portion increases along an edge length direction in which the cutting edge extends as the honed portion approaches a portion where the boundary ridge line and the cutting edge are connected to each other.

Since a portion where the boundary ridge line between the rake faces and the cutting edge are connected has a convex shape in the drill rotation direction, cutting resistance is likely to be concentrated. According to the aspect 3, since the honing width is increased in the portion of the cutting edge connected to each boundary ridge line, it is possible to suppress the occurrence of a cutting edge defect or the like in each connected portion. That is, the defect resistance of the cutting edge is further improved.

[Aspect 4] In the drill of an aspect 4, in any one of the aspects 1 to 3, preferably, the radial rake angle of the second cutting edge is -33° or more and -27° or less.

When the radial rake angle of the second cutting edge is -27° or less (i.e., when the radial rake angle is 27° or more on the negative angle side), the cutting resistance when the second cutting edge cuts the workpiece is stably increased, the chips are more likely to be hardened, and the chips are more likely to be discharged to the rear end side along the axial direction of the drill, so that the chip evacuation performance is further improved.

When the radial rake angle of the second cutting edge is -33° or more (i.e., when the radial rake angle is 33° or less on the negative angle side), it is possible to suppress an excessive increase in cutting resistance when the second cutting edge cuts the workpiece. Therefore, it is possible to suppress a problem in which cutting processing by the second cutting edge becomes unstable or a cutting edge defect or the like occurs.

When the radial rake angle of the second cutting edge is -32° or more and -28° or less, a higher effect may be obtained.

[Aspect 5] In the drill of an aspect 5, in any one of the aspects 1 to 4, preferably, a dimension of the second cutting edge along a radial direction is 4% or more and 7% or less of a diameter of a rotation locus when the cutting edge is rotated about the center axis.

When the dimension of the second cutting edge along the radial direction is 4% or more of the diameter (i.e., the cutting edge diameter) of the rotation locus of the cutting edge, the edge length of the second cutting edge is stably secured to be large. As a result, the cutting resistance when the second cutting edge cuts the workpiece is stably increased, chips are more likely to be hardened and more likely to be discharged to the rear end side along the axial direction of the drill, and the chip evacuation performance is further improved.

When the dimension of the second cutting edge along the radial direction is 7% or less of the diameter (i.e., the cutting edge diameter) of the rotation locus of the cutting edge, the edge length of the second cutting edge is prevented from becoming excessively long. Therefore, it is possible to suppress an excessive increase in cutting resistance when the second cutting edge cuts the workpiece, and it is possible to suppress problems such as instability of the cutting processing by the second cutting edge and a cutting edge defect.

[Aspect 6] In the drill of an aspect 6, in any of the aspects 1 to 5, preferably, the body has a shoulder portion that is disposed on a tip outer peripheral portion of the body and extends around the center axis, the shoulder portion has a shoulder portion strength improving surface that is formed along the shoulder portion, and the shoulder portion strength improving surface is disposed adjacent to the outer peripheral surface and the flank face.

The shoulder portion strength improving surface is formed by, for example, honing. The shoulder portion strength improving surface increases the strength of the shoulder portion, which has the highest peripheral speed (i.e., cutting speed) and is likely to have a high machining load at the tip outer peripheral portion of the body during the drilling. Therefore, chipping, defect, and the like in the vicinity of the shoulder portion are suppressed.

[Aspect 7] In the drill of an aspect 7, in any one of the aspects 1 to 6, preferably, the body has a leading edge that is disposed at a ridge line portion where the outer peripheral surface and the second rake face are connected to each other, and the leading edge has an outer peripheral honed portion formed along the leading edge.

In the present invention, as described above, since the second rake face extends in a direction opposite to the drill rotation direction as the second rake face goes toward the radially outer side, chips generated by cutting with the second cutting edge are guided to the radially outer side and are likely to rub near the leading edge. According to the aspect 7, chipping, defects, and the like near the leading edge are suppressed.

### ADVANTAGEOUS EFFECTS OF INVENTION

According to the drill of each aspect of the present invention, chips are satisfactorily processed, and the chips that have elongated can be prevented from wrapping around the drill.

### BRIEF DESCRIPTION OF DRAWINGS

[FIG. 1] FIG. 1 is a perspective view showing a drill of a first embodiment.
[FIG. 2] FIG. 2 is a front view showing the drill of the first embodiment.
[FIG. 3] FIG. 3 is a side view showing the drill of the first embodiment.
[FIG. 4] FIG. 4 is a side view showing the drill of the first embodiment.
[FIG. 5] FIG. 5 is an enlarged view of a portion V in FIG. 4.
[FIG. 6] FIG. 6 is an enlarged perspective view when viewed along an arrow VI of FIG. 4.
[FIG. 7] FIG. 7 is a schematic view showing a state of chips when a workpiece is drilled with the drill of the first embodiment.
[FIG. 8] FIG. 8 is an image showing chips generated by drilling the workpiece with the drill of the first embodiment.
[FIG. 9] FIG. 9 is a front view showing a drill of a second embodiment.
[FIG. 10] FIG. 10 is a side view showing a drill of a second embodiment.
[FIG. 11] FIG. 11 is a cross-sectional view (a transverse cross-sectional view of a body) showing a drill of the second embodiment.
[FIG. 12] FIG. 12 is a partial side view showing a modification example of the drill of the first embodiment.
[FIG. 13] FIG. 13 is a schematic view showing a state of chips when a workpiece is drilled with a drill in the related art.
[FIG. 14] FIG. 14 is an image showing chips generated by drilling the workpiece with the drill in the related art.

### DESCRIPTION OF EMBODIMENTS

### <First Embodiment>

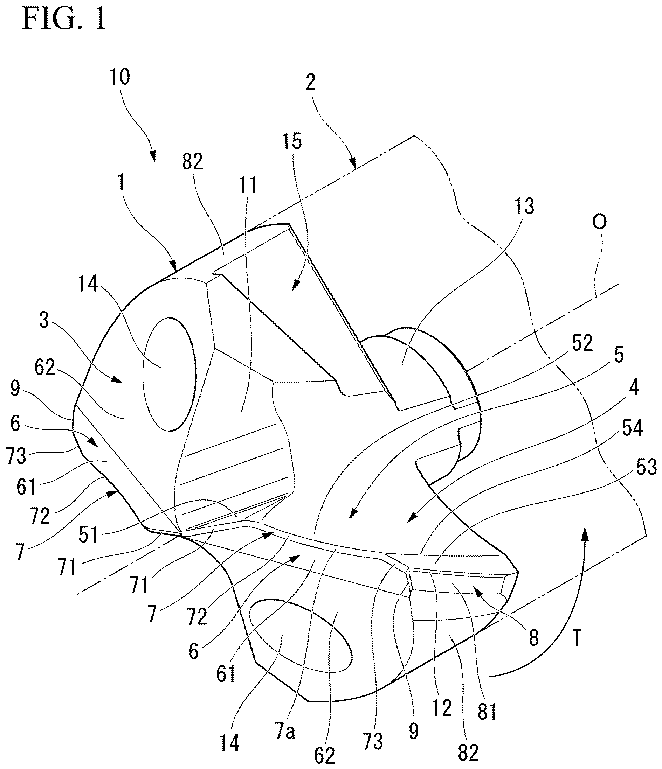

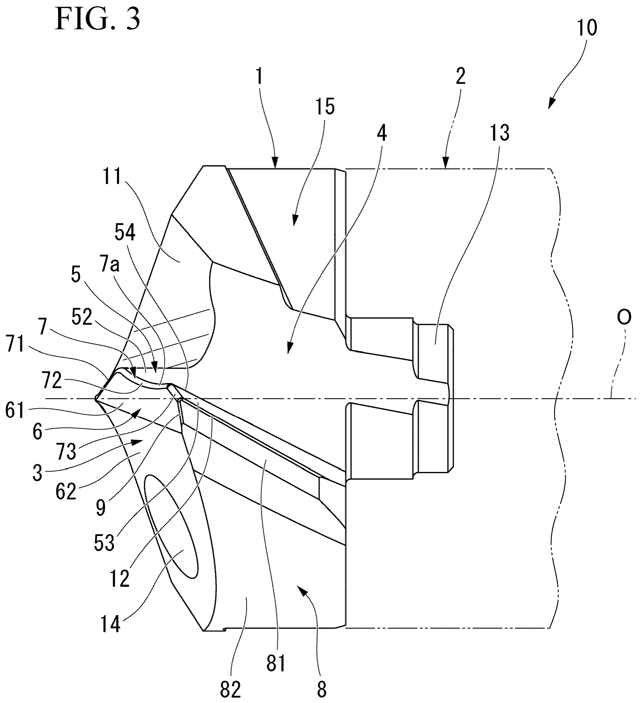

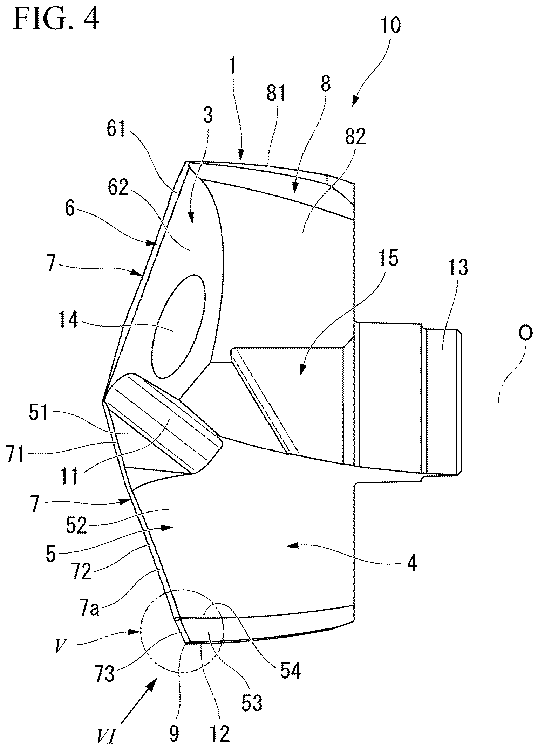

A drill 10 of a first embodiment of the present invention will be described with reference to FIGS. 1 to 8.

As shown in FIG. 1, the drill 10 includes at least a body 1. The body 1 has a substantially columnar shape with the center axis O as a center. In the present embodiment, the drill 10 includes the body 1 and a shank 2. The body 1 and the shank 2 are disposed side by side in a direction in which the center axis O extends. The body 1 may be rephrased as an "edge part".

In the present embodiment, the body 1 is attached to the shank 2 in an attachable/detachable manner. That is, the drill 10 is an indexable drill. The drill 10 is not limited thereto, and may include only the body 1 without including the shank 2. In this case, the drill 10 may be rephrased as a drill head.

### [Definition of Directions]

In the present embodiment, a direction in which the center axis O of the drill 10 extends is referred to as an axial direction. In the axial direction, a direction from the shank 2 to the body 1 is referred to as an axial tip side or simply a tip side, and a direction from the body 1 to the shank 2 is referred to as an axial rear end side or simply a rear end side.

A direction perpendicular to the center axis O is referred to as a radial direction. Of the radial direction, a direction closer to the center axis O will be called a radial inner side, and a direction away from the center axis O will be called a radial outer side.

A direction revolving around the center axis O is referred to as a circumferential direction. In the circumferential direction, a direction in which the drill 10 is rotated during drilling is referred to as a drill rotation direction T. In addition, a direction opposite to the drill rotation direction T may be referred to as an anti-drill rotation direction.

In addition, in the present embodiment, a direction in which a cutting edge 7, which will be described later, of the body 1 extends may be referred to as an edge length direction.

### [Shank]

The shank 2 has a columnar shape extending in the axial direction with the center axis O as a center. The shank 2 is held to be attachable and detachable to, for example, a spindle of a machine tool (not shown), a chuck of a drill press, or the like (hereinafter, referred to as a spindle or the like). While the shank 2 is rotated in the drill rotation direction T by the spindle or the like, the drill 10 is sent to the axial tip side, so that the body 1 cuts into a workpiece to perform drilling.

### [Body]

As shown in FIGS. 1 to 4, the body 1 extends in the axial direction with the center axis O as a center. In the present embodiment, the diameter of the body 1, that is, the cutting edge diameter D is, for example, 16 mm to 40 mm.

The body 1 has a tip surface 3 facing a tip side of the body 1, an outer peripheral surface 8 facing a radially outer side of the body 1, a chip discharge groove 4, a rake face 5, a flank face 6, a thinning face 11, a cutting edge 7, a shoulder portion 9, a leading edge 12, an attachment portion 13, a screw hole 14, and a rotation support portion 15.

The chip discharge groove 4 has a groove-like shape that is open to the tip surface 3 and the outer peripheral surface 8 of the body 1 and extends from the tip surface 3 to the rear end side. Specifically, the chip discharge groove 4 extends in the anti-drill rotation direction as the chip discharge groove 4 goes from the tip surface 3 toward the axial rear end side. A plurality of chip discharge grooves 4 are provided on the body 1 at intervals in the circumferential direction. In the present embodiment, two chip discharge grooves 4 are provided at equal pitches in the circumferential direction.

The rake face 5 is disposed at least at the tip portion of the chip discharge groove 4 and faces the drill rotation direction T. The rake face 5 has a thinning rake face 51, a first rake face 52, and a second rake face 53.

The thinning rake face 51 is disposed at a radially inner end portion of the tip portion of the chip discharge groove 4. In the present embodiment, the thinning rake face 51 has a substantially triangular planar shape.

The first rake face 52 is disposed radially outward of the thinning rake face 51. In other words, the thinning rake face 51 is disposed radially inward of the first rake face 52. In the present embodiment, the first rake face 52 has a curved surface shape.

Although not particularly shown, in a cross-sectional view perpendicular to the center axis O (hereinafter, may be simply referred to as a transverse cross-sectional view), the first rake face 52 forms a concave curved shape that is recessed in the anti-drill rotation direction. That is, the first rake face 52 has a concave curved shape that protrudes toward the anti-drill rotation direction.

The dimension (i.e., the width dimension) of the first rake face 52 along the radial direction is larger than the dimension of the thinning rake face 51 along the radial direction.

The second rake face 53 is disposed radially outward of the first rake face 52. In the present embodiment, the second rake face 53 has a planar shape. However, the second rake face 53 is not limited thereto and may have a curved surface shape. In this case, in the transverse cross-sectional view, the second rake face 53 has a concave curved shape that is recessed in the anti-drill rotation direction. The dimension of the second rake face 53 along the radial direction is smaller than a dimension of the thinning rake face 51 along the radial direction and is smaller than a dimension of the first rake face 52 along the radial direction.

The radially outer end portion of the second rake face 53 is connected to the outer peripheral surface 8 via a ridge line portion (leading edge 12). That is, the second rake face 53 is connected to the outer peripheral surface 8. The second rake face 53 extends substantially in the axial direction along a radially outer edge among the wall surfaces of the chip discharge groove 4 facing the drill rotation direction T. Specifically, the second rake face 53 extends toward the anti-drill rotation direction as the second rake face 53 goes toward the axial rear end side.

The second rake face 53 extends in the direction (i.e., the anti-drill rotation direction) opposite to the drill rotation direction T as the second rake face 53 goes toward the radially outer side. Specifically, the second rake face 53 extends in the anti-drill rotation direction as the second rake face 53 goes toward the radially outer side over the entire radial range of the second rake face 53. That is, the second rake face 53 is a negative radial rake face over the entire region in the radial direction. Therefore, the ridge line portion (leading edge 12) where the radially outer end portion of the second rake face 53 and the end portion of the outer peripheral surface 8 in the drill rotation direction T are connected to each other forms an obtuse angle in a transverse cross-sectional view.

The radially inner end portion of the second rake face 53 is connected to the radially outer end portion of the first rake face 52 via the boundary ridge line 54. The boundary ridge line 54 is a ridge line portion that protrudes in the drill rotation direction T and extends in the substantially axial direction. Specifically, the boundary ridge line 54 extends toward the anti-drill rotation direction as the boundary ridge line 54 goes toward the axial rear end side.

The flank face 6 is disposed on the tip surface 3. The flank face 6 has a first flank face 61 and a second flank face 62 that is disposed adjacent to the first flank face 61 in the anti-drill rotation direction.

The first flank face 61 extends toward the axial rear end side as the first flank face 61 goes toward the anti-drill rotation direction. The second flank 62 extends toward the axial rear end side as the second flank face 62 goes toward the anti-drill rotation direction, and has a larger flank angle than the first flank face 61. That is, a displacement amount (inclination corresponding to a flank angle) in the axial direction per unit length along the circumferential direction in the second flank face 62 is larger than a displacement amount in the first flank face 61. **In** the present embodiment, the flank angle of the first flank face 61 is, for example, 6° or more and 8° or less.

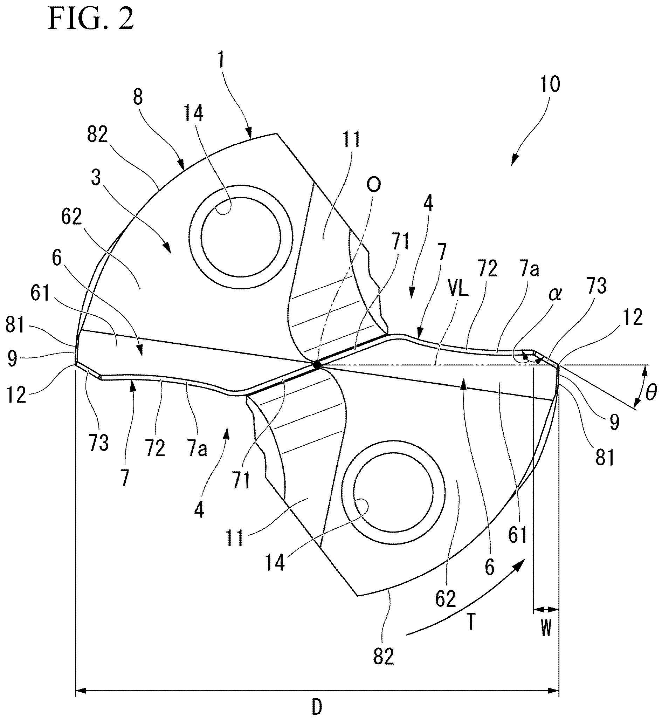

As shown in FIG. 2, in a front view (hereinafter, may be simply referred to as a front view of a drill) when the body 1 (drill 10) is viewed from the tip side along the axial direction, the first flank face 61 forms a strip shape (substantially polygonal shape elongated in the radial direction) extending in the radial direction, and the second flank face 62 forms a substantially fan shape.

In the present embodiment, the flank face 6 has two inclined surfaces (the first flank face 61 and the second flank face 62) having different flank angles from each other, but the present invention is not limited thereto. The flank face 6 may be formed of, for example, a single inclined surface or may include three or more inclined surfaces arranged in the circumferential direction.

As shown in FIGS. 1 to 4, the thinning face 11 is disposed on the tip surface 3.

The thinning face 11 is disposed adjacent to the flank face 6 in the anti-drill rotation direction.

In the present embodiment, the thinning face 11 is disposed adjacent to the second flank face 62 in the anti-drill rotation direction. The thinning face 11 extends toward the axial rear end side as the thinning face 11 goes toward in the anti-drill rotation direction. A displacement amount (inclination corresponding to the flank angle) in the axial direction per unit length along a circumferential direction on the thinning face 11 is larger than the displacement amount in the flank face 6. The radially inner end portion of the thinning face 11 is connected to the thinning rake face 51.

The cutting edge 7 is disposed at the ridge line portion where the rake face 5 and the flank face 6 are connected to each other. A plurality of cutting edges 7 are provided on the body 1 at intervals in the circumferential direction. In the present embodiment, two cutting edges 7 are provided at equal pitches in the circumferential direction. That is, the drill 10 of the present embodiment is a twist drill having two edges.

The cutting edge 7 includes a thinning edge 71, a first cutting edge 72, and a second cutting edge 73.

The thinning edge 71 is disposed at the radially inner end portion of the cutting edge 7. The thinning edge 71 is disposed at a ridge line portion where the thinning rake face 51 and the first flank face 61 are connected to each other. That is, the thinning edge 71 extends along the tip edge of the thinning rake face 51. The thinning edge 71 extends along the radial direction from the vicinity of the center axis O toward the radially outer side in the front view of the drill. **In** addition, the thinning edge 71 extends toward the axial rear end side as the thinning edge 71 goes toward the radially outer side. **In** the present embodiment, the thinning edge 71 has a linear shape.

The first cutting edge 72 is disposed between both end portions of the cutting edge 7 in the radial direction. The first cutting edge 72 is disposed at the ridge line portion where the first rake face 52 and the first flank face 61 are connected to each other. That is, the first cutting edge 72 extends along the tip edge of the first rake face 52. The first cutting edge 72 has a concave curved shape recessed in the anti-drill rotation direction in the front view of the drill. **In** addition, the first cutting edge 72 extends toward the axial rear end side as it moves toward the radially outer side. The radially inner end portion of the first cutting edge 72 is connected to the radially outer end portion of the thinning edge 71. **In** the present embodiment, the connection portion between the first cutting edge 72 and the thinning edge 71 has a convex curve shape protruding in the drill rotation direction T.

The second cutting edge 73 is disposed at the radially outer end portion of the cutting edge 7. The second cutting edge 73 is disposed at the ridge line portion where the second rake face 53 and the first flank face 61 are connected to each other. That is, the second cutting edge 73 extends along the tip edge of the second rake face 53. **In** the present embodiment, the second cutting edge 73 has a linear shape. However, the second cutting edge 73 is not limited thereto and may have a concave curved shape. When the second cutting edge 73 has a concave curved shape, it is preferable that the second cutting edge 73 has, for example, a concave curved shape having a large (i.e., large R) curvature radius that is recessed in the anti-drill rotation direction. When the second cutting edge 73 has a concave curved shape, the maximum value of the dimension to which the second cutting edge 73 is concave, that is, the concave amount with respect to the imaginary straight line passing through the radially inner end of the second cutting edge 73 (the connection portion with the first cutting edge 72) and the radially outer end of the second cutting edge 73 (the connection portion with the leading edge 12 and the shoulder portion 9) is, for example, 0.001 mm or more and 0.015 mm or less.

**In** addition, the second cutting edge 73 extends toward the axial rear end side as the second cutting edge 73 goes toward the radially outer side. The radially inner end portion of the second cutting edge 73 is connected to the radially outer end portion of the first cutting edge 72. **In** the present embodiment, the connection portion between the second cutting edge 73 and the first cutting edge 72 has a convex curve shape or a convex V-shape that protrudes in the drill rotation direction T.

As shown in FIG. 2, the radial rake angle θ of the second cutting edge 73 is a negative angle over the entire length of the second cutting edge 73.

**In** the present embodiment, as shown in FIG. 2, the "radial rake angle θ of the second cutting edge 73" refers to an angle θ formed between the second cutting edge 73 and **an imaginary** straight line VL passing through (a part of) the second cutting edge 73 and the center axis O, as viewed from the tip side along the axial direction of the drill 10. In addition, the expression "the radial rake angle θ of the second cutting edge 73 is a negative angle (minus angle)" refers to a case where the second cutting edge 73 extends in the direction opposite to the drill rotation direction T as the second cutting edge 73 goes toward the radially outer side. When the radial rake angle θ is a negative angle, the numerical value of the angle may be represented with a "-" attached. In addition, unlike the present embodiment, "the radial rake angle θ of the second cutting edge 73 is a positive angle (plus angle)" refers to a case where the second cutting edge 73 extends toward the drill rotation direction as the second cutting edge 73 goes toward the radially outer side. When the radial rake angle θ is a positive angle, the numerical value of the angle may be represented with a "+" attached.

In the present embodiment, the radial rake angle θ of the second cutting edge 73 is - 33° or more and -27° or less. That is, the radial rake angle θ of the second cutting edge 73 is 27° or more and 33° or less on the negative angle side. When the radial rake angle θ of the second cutting edge 73 is -32° or more and -28° or less, a higher effect may be obtained.

In addition, the dimension W of the second cutting edge 73 along the radial direction is 4% or more and 7% or less of the diameter D (i.e., the cutting edge diameter D) of the rotation locus (virtual circle) when the cutting edge 7 is rotated about the center axis O.

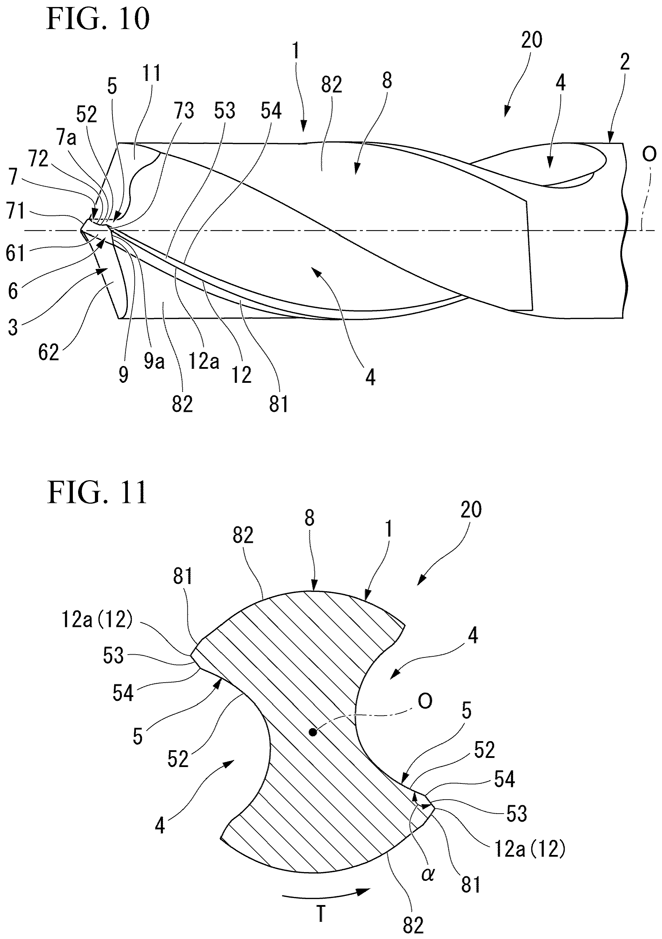

In the front view of the drill shown in FIG. 2, an angle α formed between the first cutting edge 72 and the second cutting edge 73 is, for example, 145° or more and 155° or less. The angle α corresponds to an angle (i.e., an opening angle of the boundary ridge line 54 in the transverse cross-sectional view) formed between the first rake face 52 and the second rake face 53 in the transverse cross-sectional view of the body 1 (drill 10) (refer to FIG. 11 of the second embodiment described later).

As shown in FIGS. 1 to 4, the cutting edge 7 has a honed portion 7a formed at the cutting edge of the cutting edge 7. The honed portion 7a extends over at least the entire length of the second cutting edge 73. In the present embodiment, the honed portion 7a extends over the thinning edge 71, the first cutting edge 72, and the second cutting edge 73. In the present embodiment, the honed portion 7a of the cutting edge 7 is a round honed portion. That is, in the honed portion 7a, a cross-sectional shape of the cutting edge 7 perpendicular to the edge length direction is a convex curve shape.

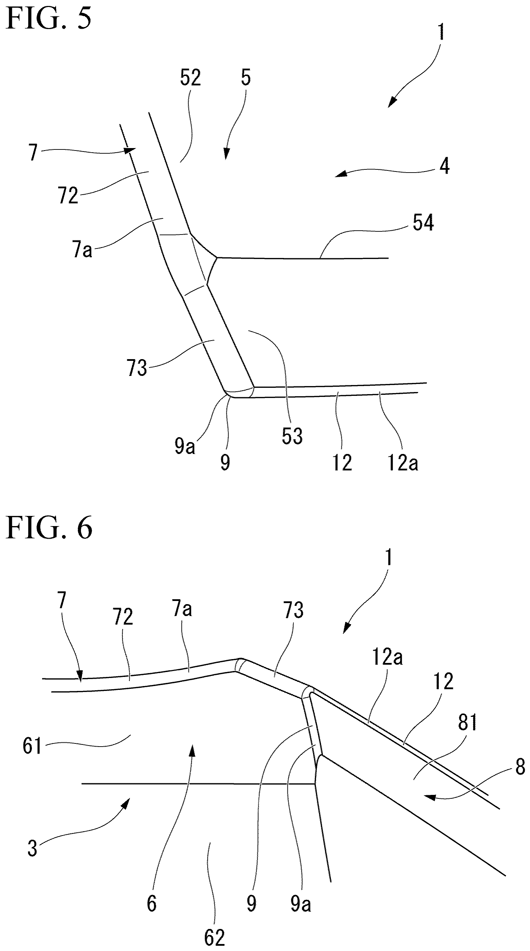

As shown in FIG. 5, the honing width of the honed portion 7a of the cutting edge 7, that is, a width dimension of the honed portion 7a along a direction perpendicular to the edge length direction of the cutting edge 7 is maximized at a connection portion between the first cutting edge 72 and the second cutting edge 73. Specifically, in the present embodiment, the honing width of the honed portion 7a in at least the first cutting edge 72 is the largest in the connection portion between the first cutting edge 72 and the second cutting edge 73. In addition, the honing width of the honed portion 7a in the second cutting edge 73 is also the maximum in the connection portion between the first cutting edge 72 and the second cutting edge 73. However, the present invention is not limited thereto, and although not shown, the honing width of the honed portion 7a of the second cutting edge 73 may be maximized at a connection portion between the second cutting edge 73 and the leading edge 12. In addition, the honing width of the honed portion 7a in the connection portion between the first cutting edge 72 and the second cutting edge 73 is larger than the honing width of the honed portion 7a in the thinning edge 71.

In the present embodiment, the honing width of the honed portion 7a in the connection portion between the first cutting edge 72 and the second cutting edge 73 increases as the honing width approaches the boundary ridge line 54 along the edge length direction of the cutting edge 7, and is maximized on the boundary ridge line 54.

As shown in FIGS. 1 to 4, the outer peripheral surface 8 has a margin 81 and a body clearance face 82.

The margin 81 is disposed at an end portion of the outer peripheral surface 8 in the drill rotation direction T and extends in the substantially axial direction. Specifically, the margin 81 extends toward the anti-drill rotation direction as the margin 81 goes toward the axial rear end side. The margin 81 and the second rake face 53 are connected to each other through the ridge line portion (leading edge 12). That is, the margin 81 is connected to the second rake face 53. The margin 81 is disposed adjacent to the leading edge 12 in the anti-drill rotation direction. The margin 81 is positioned on a cylindrical rotation locus (not shown) obtained by rotating the leading edge 12 about the center axis O. The margin 81 has an arc shape centered on the center axis O in a transverse cross-sectional view perpendicular to the center axis O.

The body clearance face 82 is disposed adjacent to the margin 81 in the anti-drill rotation direction. The body clearance face 82 is disposed radially inward of the margin 81. The body clearance face 82 faces the inner peripheral surface of the machined hole of the workpiece with a gap in the radial direction during drilling.

As shown in FIGS. 1, 3, and 6, the shoulder portion 9 is disposed on the tip outer peripheral portion of the body 1. The shoulder portion 9 extends around the center axis O. Specifically, the shoulder portion 9 slightly extends toward the rear end side as the shoulder portion 9 goes toward the anti-drill rotation direction.

The shoulder portion 9 has a shoulder portion strength improving surface 9a formed along the shoulder portion 9. The shoulder portion strength improving surface 9a is formed by, for example, honing. In the present embodiment, the shoulder portion strength improving surface 9a is a chamfer honed portion. That is, the shoulder portion strength improving surface 9a has a chamfered shape. The honing width of the shoulder portion strength improving surface 9a is smaller than the honing width of the honed portion 7a of the cutting edge 7.

The shoulder portion strength improving surface 9a is disposed adjacent to the outer peripheral surface 8 and the flank face 6. Specifically, the shoulder portion strength improving surface 9a is disposed between the tip portion of the margin 81 and the radially outer end portion of the first flank face 61, and is connected to each of the margin 81 and the first flank face 61.

As shown in FIGS. 1 to 4, the leading edge 12 is disposed at a ridge line portion where the margin 81 (outer peripheral surface 8) and the second rake face 53 are connected to each other. The leading edge 12 extends in the substantially axial direction, and specifically, extends toward the anti-drill rotation direction as the leading edge 12 goes toward the axial rear end side. In the leading edge 12, the radial rake angle is a negative angle over the entire length in the extending direction.

A back taper may be applied to the leading edge 12. In this case, the leading edge 12 is slightly positioned radially inward as the leading edge 12 goes toward the axial rear end side.

As shown in FIGS. 5 and 6, the leading edge 12 has an outer peripheral honed portion 12a formed along the leading edge 12. In the present embodiment, the outer peripheral honed portion 12a of the leading edge 12 is a round honed portion. That is, the outer peripheral honed portion 12a has a cross-sectional shape that is a convex curve shape in a direction perpendicular to the extending direction of the leading edge 12. The honing width of the outer peripheral honed portion 12a of the leading edge 12 is smaller than the honing width of the honed portion 7a of the cutting edge 7.

As shown in FIGS. 1 to 4, the attachment portion 13 protrudes from the rear end surface of the body 1 to the rear end side. The attachment portion 13 has a substantially columnar shape with the center axis O as a center. The attachment portion 13 is inserted into a mounting hole (not shown) of the shank 2.

The screw hole 14 is a through-hole that penetrates the body 1 in the axial direction. A plurality of (in the present embodiment, a pair of) screw holes 14 are provided at intervals in the circumferential direction. A screw member (not shown) is inserted into the screw hole 14 and is screwed to the shank 2. As a result, the body 1 is fixed to the shank 2.

The rotation support portion 15 is disposed between the chip discharge groove 4 and the body clearance face 82 in the circumferential direction. The rotation support portion 15 faces the anti-drill rotation direction. A plurality of (in the present embodiment, a pair of) rotation support portions 15 are provided at intervals in the circumferential direction. The rotation support portion 15 comes into contact with a rotation receiving portion (not shown) that faces the drill rotation direction T of the shank 2.

### [Effects Achieved by Present Embodiment]

According to the drill 10 of the present embodiment described above, the radial rake angle θ of the second cutting edge 73 disposed at the radially outer end portion of the cutting edge 7 is a negative angle over the entire region of the edge length of the second cutting edge 73. Therefore, the cutting resistance when the second cutting edge 73 cuts the workpiece is increased, and a large load is applied to the generated chips to promote the hardening of the chips.

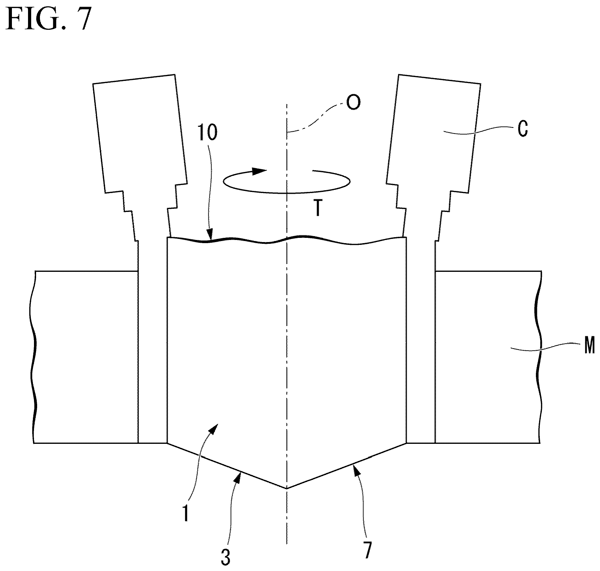

FIG. 7 is a view showing drilling a workpiece M by the drill 10 of the present embodiment as a schematic view. According to the present embodiment, since a chip C is hardened, even when the chip C is elongated in a thread-like shape, the chip C is prevented from bending or spreading radially outward due to the centrifugal force generated by the rotation of the drill 10. That is, since the chip C is likely to elongate to the rear end side along the axial direction of the drill 10 and is unlikely to be bent, a problem in which the elongated chip C is wound around the drill 10 is suppressed.

**In** addition, since the chip C is work-hardened, cracks can be easily generated in the chip C, and the elongated chip C is easily divided. Therefore, the excessive elongation of the chip C is suppressed, and the chip C can be satisfactorily processed.

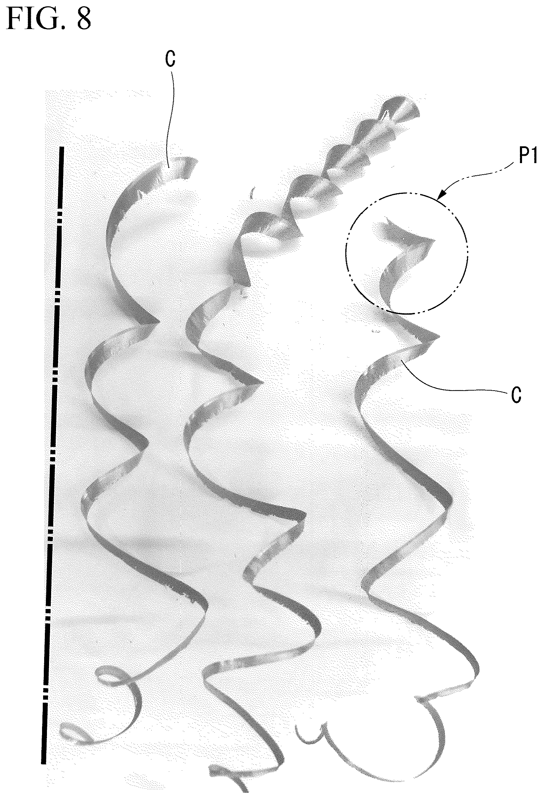

Specifically, as shown in FIG. 8, the chips C generated by the drill 10 of the present embodiment are less likely to be bent due to work hardening, and tend to elongate in a substantially certain direction as indicated by a two-dot chain line in FIG. 8. **In** addition, the chip C has a divided portion P1 instead of the bent portion. In particular, when the cutting edge diameter D of the drill 10 is large as in the present embodiment, the effect of being able to satisfactorily process the elongated chip C is more remarkable than that of the drill of the related art.

In addition, in the present embodiment, the second rake face 53 extends in the direction opposite to the drill rotation direction T as the second rake face 53 goes toward the radially outer side. Therefore, the chips generated by the cutting with the second cutting edge 73 are likely to be guided to the radially outer side by coming into contact with the second rake face 53. This action can further improve the chip evacuation performance.

Therefore, according to the present embodiment, the chips are satisfactorily processed, and the elongated chips can be prevented from wrapping around the drill 10.

In addition, in the present embodiment, the cutting edge 7 has the honed portion 7a, and the honed portion 7a is disposed over at least the entire length of the second cutting edge 73 in the edge length direction.

In the present embodiment, as described above, the cutting resistance of the second cutting edge 73 is actively increased to improve the chip evacuation performance. By applying the honed portion 7a over the entire region of the edge length of the second cutting edge 73 as in the above-described configuration, chipping, defect, and the like of the second cutting edge 73 are suppressed, and the tool life of the drill 10 is extended.

In addition, in the present embodiment, the honed portion 7a extends over the thinning edge 71, the first cutting edge 72, and the second cutting edge 73. Then, the honing width of the honed portion 7a in at least the first cutting edge 72 is the maximum in the connection portion between the first cutting edge 72 and the second cutting edge 73. In addition, in the present embodiment, the honing width of the honed portion 7a in the second cutting edge 73 is also the maximum in the connection portion between the first cutting edge 72 and the second cutting edge 73.

Since the connection portion between the first cutting edge 72 and the second cutting edge 73 has a convex shape in the drill rotation direction T, the cutting resistance is likely to be concentrated. According to the above-described configuration, in the connection portion between the first cutting edge 72 and the second cutting edge 73, since each of the honing widths of the first cutting edge 72 and the second cutting edge 73 is maximized, it is possible to suppress the occurrence of the cutting edge defect and the like in the connection portion.

In addition, in the present embodiment, the radial rake angle θ of the second cutting edge 73 is -33° or more and -27° or less.

When the radial rake angle θ of the second cutting edge 73 is -27° or less (i.e., when the radial rake angle θ is 27° or more on the negative angle side), the cutting resistance when the second cutting edge 73 cuts the workpiece is stably increased, the chips are more likely to be hardened, and the chips are more likely to be discharged to the rear end side along the axial direction of the drill 10, so that the chip evacuation performance is further improved.

When the radial rake angle θ of the second cutting edge 73 is -33° or more (i.e., when the radial rake angle θ is 33° or less on the negative angle side), it is possible to suppress an excessive increase in cutting resistance when the second cutting edge 73 cuts the workpiece. Therefore, it is possible to suppress a problem in which the cutting processing by the second cutting edge 73 becomes unstable or a cutting edge defect or the like occurs.

**In** addition, in the present embodiment, the dimension W of the second cutting edge 73 along the radial direction is 4% or more and 7% or less with respect to the diameter D (cutting edge diameter D) of the rotation locus when the cutting edge 7 is rotated about the center axis O.

When the dimension W of the second cutting edge 73 along the radial direction is 4% or more of the cutting edge diameter **D,** the edge length of the second cutting edge 73 is stably secured to be large. As a result, the cutting resistance when the second cutting edge 73 cuts the workpiece is stably increased, the chips are more likely to be hardened and more likely to be discharged to the rear end side along the axial direction of the drill 10, and the chip evacuation performance is further improved.

When the dimension W of the second cutting edge 73 along the radial direction is 7% or less of the cutting edge diameter **D,** the edge length of the second cutting edge 73 is prevented from becoming excessively long. Therefore, it is possible to suppress an excessive increase in cutting resistance when the second cutting edge 73 cuts the workpiece, and it is possible to suppress problems such as instability of the cutting processing by the second cutting edge 73 and the cutting edge defect.

In addition, in the present embodiment, in the front view of the drill, the angle α formed between the first cutting edge 72 and the second cutting edge 73 is 145° or more and 155° or less.

When the angle α is 145° or more, it is possible to stably increase the cutting resistance when the second cutting edge 73 cuts the workpiece.

When the angle α is 155° or less, it is possible to prevent the cutting resistance when the second cutting edge 73 cuts the workpiece from becoming excessively large.

In addition, in the present embodiment, the shoulder portion 9 has a shoulder portion strength improving surface 9a adjacent to the outer peripheral surface 8 and the flank face 6.

The shoulder portion strength improving surface 9a increases the strength of the shoulder portion 9, which has the highest peripheral speed (i.e., cutting speed) and is likely to have a high machining load, at the tip outer peripheral portion of the body 1 during drilling. Therefore, chipping, a defect, or the like in the vicinity of the shoulder portion 9 is suppressed.

In addition, in the present embodiment, the honing width of the shoulder portion strength improving surface 9a is smaller than the honing width of the honed portion 7a of the cutting edge 7. In particular, the honing width of the shoulder portion strength improving surface 9a is smaller than the honing width of the honed portion 7a at the radially outer end portion of the second cutting edge 73. In this case, it is possible to suppress the occurrence of a large burr at the opening edge of the machined hole when the workpiece is drilled with the drill 10.

In addition, in the present embodiment, the leading edge 12 has the outer peripheral honed portion 12a. In the present embodiment, as described above, since the second rake face 53 extends in a direction opposite to the drill rotation direction T as the second rake face 53 goes toward the radially outer side, chips generated by cutting with the second cutting edge 73 are guided to the radially outer side and are likely to rub near the leading edge 12. According to the above-described configuration, chipping, defects, and the like near the leading edge 12 are suppressed.

### <Second Embodiment>

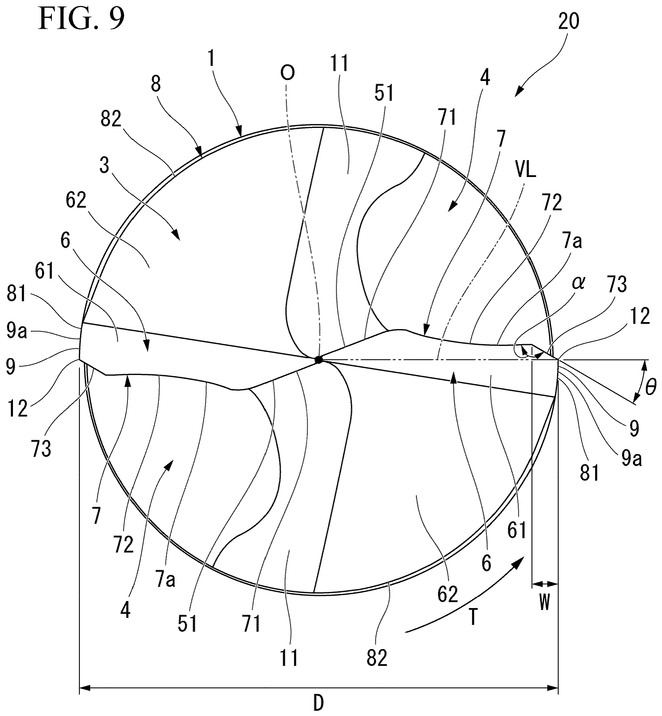

Next, a drill 20 of a second embodiment of the present invention will be described with reference to FIGS. 9 to 11. In the present embodiment, the same components as those in the above-described embodiment will be denoted by the same reference numerals or the like, and the description thereof will be omitted.

As shown in FIGS. 9 to 11, in the drill 20 of the present embodiment, the body 1 and the shank 2 are integrally formed by a single member. That is, the drill 20 of the present embodiment is a solid drill. The drill 20 may have a configuration in which, for example, the body 1 and the shank 2 are manufactured separately from each other and are integrated by brazing or the like.

In the drill 20 of the present embodiment, the same effects as those of the drill 10 of the first embodiment are obtained.

### [Other Configurations Included in Present Invention]

The present invention is not limited to the above-described embodiments. For example, as will be described below, the configurations can be changed within the scope not departing from the concept of the present invention.

FIG. 12 is a partial side view showing a modification example of the drill 10 described in the first embodiment. Even in the modification example shown in FIG. 12, as in the first embodiment, the honed portion 7a extends over the thinning edge 71, the first cutting edge 72, and the second cutting edge 73. **In** this modification example, the honing width of the honed portion 7a in the thinning edge 71 is maximized at the connection portion between the thinning edge 71 and the first cutting edge 72.

**In** addition, the honing width of the honed portion 7a in the first cutting edge 72 is maximized at the connection portion between the thinning edge 71 and the first cutting edge 72 or the connection portion between the first cutting edge 72 and the second cutting edge 73. In the example shown in FIG. 12, the honing width of the honed portion 7a in the first cutting edge 72 is maximized in the connection portion between the thinning edge 71 and the first cutting edge 72.

**In** addition, the honing width of the honed portion 7a in the connection portion between the thinning edge 71 and the first cutting edge 72 increases as the honing width approaches the boundary ridge line 55 where the thinning rake face 51 and the first rake face 52 are connected, along the edge length direction of the cutting edge 7, and is maximum on the boundary ridge line 55. The boundary ridge line 55 is a ridge line portion that protrudes in the drill rotation direction T and extends toward the radially inner side as the boundary ridge line 55 goes toward the axial rear end side.

**In** addition, the honing width of the honed portion 7a in the second cutting edge 73 is the maximum at the connection portion between the first cutting edge 72 and the second cutting edge 73 or the connection portion between the second cutting edge 73 and the leading edge 12. **In** the example shown in FIG. 12, in the honed portion 7a of the second cutting edge 73, the honing width in the connection portion between the first cutting edge 72 and the second cutting edge 73 and the honing width in the connection portion between the second cutting edge 73 and the leading edge 12 are substantially the same.

More specifically, each of the boundary ridge line 55 where the thinning rake face 51 and the first rake face 52 are connected and the boundary ridge line 54 where the first rake face 52 and the second rake face 53 are connected is a ridge line portion protruding in the drill rotation direction T and are connected to the cutting edge 7. In addition, the honing width of the honed portion 7a increases as the honing width approaches the portion where the boundary ridge line 55 and the cutting edge 7 are connected, along the edge length direction in which the cutting edge 7 extends. In addition, the honing width of the honed portion 7a increases as the honing width approaches the portion where the boundary ridge line 54 and the cutting edge 7 are connected, along the edge length direction in which the cutting edge 7 extends.

In the drill 10 of the modification example shown in FIG. 12, the same effects as those of the first embodiment described above can be obtained. In addition, since the honing width of the honed portion 7a is increased at least at a portion (connected portion) where the cutting edge 7 intersects with each of the boundary ridge lines 54 and 55, the defect resistance of the cutting edge 7 is further improved.

In the first embodiment and the second embodiment described above, an example in which the drills 10 and 20 are twist drills having two edges has been described, but the present invention is not limited thereto. The drills 10 and 20 may be a drill having one edge or a drill having one or three or more edges.

According to the present invention, all of the configurations described in the embodiments, the modification examples described above, and the like may be combined with each other without departing from the scope of the present invention. Alternatively, additions, omissions, substitutions or other changes of the configurations can be made. Moreover, the present invention is not limited by the embodiment described above and the like, but is limited only by the scope of the claims.

### INDUSTRIAL APPLICABILITY

According to the drill of the present invention, the chips are satisfactorily processed, and the elongated chips can be prevented from wrapping around the drill. Therefore, industrial use thereof is possible.

### REFERENCE SIGNS LIST

1 Body
3 Tip surface
4 Chip discharge groove
5 Rake face
6 Flank face
7 Cutting edge
7a Honed portion
8 Outer peripheral surface
9 Shoulder portion
9a Shoulder portion strength improving surface
10, 20 Drill
12 Leading edge
12a Outer peripheral honed portion
51 Thinning rake face
52 First rake face
53 Second rake face
54, 55 Boundary ridge line
71 Thinning edge
72 First cutting edge
73 Second cutting edge
D Diameter (cutting edge diameter) of rotation locus when cutting edge is rotated about center axis
O Center axis
T Drill rotation direction
W Dimension of second cutting edge in radial direction
θ Radial rake angle

## Claims

1. A drill comprising a body extending in an axial direction with a center axis as a center,
wherein the body includes:
a chip discharge groove that is open to a tip surface and an outer peripheral surface of the body and extends from the tip surface to a rear end side,
a rake face that is positioned at least at a tip portion of the chip discharge groove and faces a drill rotation direction around the center axis,
a flank face that is disposed on the tip surface, and
a cutting edge that is disposed at a ridge line portion where the rake face and the flank face are connected to each other,
the rake face includes:
a first rake face, and
a second rake face that is disposed radially outward of the first rake face and is connected to the outer peripheral surface,
the second rake face extends in a direction opposite to the drill rotation direction around the center axis as the second rake face goes toward a radially outer side,
the cutting edge includes:
a first cutting edge extending along a tip edge of the first rake face, and
a second cutting edge that is connected to a radially outer end portion of the first cutting edge and extends along a tip edge of the second rake face,
the second cutting edge has a linear shape or a concave curved shape, and
a radial rake angle of the second cutting edge is a negative angle over an entire length of the second cutting edge.

2. The drill according to claim 1:
wherein the cutting edge has a honed portion formed at a cutting edge of the cutting edge, and the honed portion extends over at least the entire length of the second cutting edge.

3. The drill according to claim 1 or 2:
wherein the rake face has a thinning rake face that is disposed radially inward of the first rake face,
the cutting edge has a thinning edge that is connected to a radially inner end portion of the first cutting edge and extends along a tip edge of the thinning rake face,
each of a boundary ridge line where the thinning rake face and the first rake face are connected to each other and a boundary ridge line where the first rake face and the second rake face are connected to each other is a ridge line portion protruding in the drill rotation direction and is connected to the cutting edge,
the cutting edge has a honed portion formed at a cutting edge of the cutting edge,
the honed portion extends over the thinning edge, the first cutting edge, and the second cutting edge, and
a honing width of the honed portion increases along an edge length direction in which the cutting edge extends as the honed portion approaches a portion where the boundary ridge line and the cutting edge are connected to each other.

4. The drill according to any one of Claims 1 to 3:
wherein the radial rake angle of the second cutting edge is -33° or more and -27° or less.

5. The drill according to any one of claims 1 to 4:
wherein a dimension of the second cutting edge along a radial direction is 4% or more and 7% or less of a diameter of a rotation locus when the cutting edge is rotated about the center axis.

6. The drill according to any one of claims 1 to 5:
wherein the body has a shoulder portion that is disposed on a tip outer peripheral portion of the body and extends around the center axis,
the shoulder portion has a shoulder portion strength improving surface that is formed along the shoulder portion, and
the shoulder portion strength improving surface is disposed adjacent to the outer peripheral surface and the flank face.

7. The drill according to any one of claims 1 to 6:
wherein the body has a leading edge that is disposed at a ridge line portion where the outer peripheral surface and the second rake face are connected to each other, and
the leading edge has an outer peripheral honed portion formed along the leading edge.
